# EUROPEAN PATENT APPLICATION

(11) **EP 0 859 180 A1**
(43) Date of publication of application: **19.08.1998**
(21) Application number: 97300998.8
(22) Date of filing: 17.02.1997
(51) Int. Cl.: F16L 3/015, F16L 11/18

(54) **Bend Limiter**

(71) Applicant: Orcina Cable Protection Limited, Ulverston, Cumbria LA12 9DL (GB)
(72) Inventor: Carson, Richard Mark, Ulverston, Cumbria, LA12 7QN (GB)
(74) Representative: Cardwell, Stuart Martin

(57) **Abstract**

The bend limiter is made from a tubular body which has one or more lines of profiled slotting 10, each line defines a series of formations having component parts 8, 9 which are interlocked longitudinally and circumferentially. The slotting has a finite width which allows the component parts to move relative to each other within prescribed limits. In one embodiment, the tubular member may be divided into a number of axial components 3, 4, 5, 6 connected by the interlocking formations. In another, the line of slotting follows a helical path.

## Description

The present invention relates to a bend limiter.

Bend limiters are used for specific applications to control bending in cables, hoses, or umbilicals, especially at their termination but not exclusively so. Bend limiters are employed in situations where a cable or other flexible line has a minimum permissible radius of curvature which distinguishes them from bend stiffeners which are usually made of an elastomeric material and do not provide a fixed minimum permissible radius of curvature.

Existing designs of bend limiters utilise rigid materials and rely on establishing tensile and compressive loads in the components at the limit condition. One known design utilises a plurality of collars which are fitted around the cable and which are loosely assembled together axially using nuts and bolts. The arrangement allows relative movement until the collars come into contact on the inside of the bend and the bolts are subject to tensile loading on the outside of the bend by contact with the respective collars. Other proposals replace the bolts with a double ended hook arrangement engaging with collars placed on the cable. Both these types of construction have the disadvantage that they use material very inefficiently. Only a small fraction of the circumference is stressed and the designs inherently require extra wall thickness to accommodate the tensile stop mechanism. Other proposals utilise sleeves with spherical joints with the aim of distributing the tensile forces. However, these are expensive to construct and the spherical joint is inherently large.

The present invention aims to develop the first mentioned solutions in a way which uses material more efficiently.

Accordingly, the present invention provides a device for placing about a cable, hose or other elongate flexible member to limit the bend radius as viewed along the longitudinal axis thereof, the device comprising a tubular body having one or more lines of profiled slotting, each line defining a series of formations having component parts which are interlocked longitudinally and circumferentially and in which the slotting has a finite width which allows the component parts to move relative to each other within prescribed limits.

The line of slotting may extend circumferentially around the sleeve, say in a plane perpendicular to the longitudinal axis, and there may be several such lines axially spaced along the sleeve to divide the sleeve into a plurality of axial components connected by said interlocking formations. Alternatively, the line of the formations could be helical extending along the sleeve. There may be more than one helical line of formations so as to divide the sleeve into a corresponding number of intertwined elements cf. multi-stard thread. Such a helical line or lines may extend the full length of the sleeve thereby dividing it into two components, or exceptionally, the helical line or lines may start and/or finish intermediate the length of the sleeve. The latter would require the material of the sleeve to have an ability to flex. In either case the finite width of the slotting allows the adjacent parts to rotate relative to each other within prescribed limits and in consequence the limiter can take up a constant bend radius. Preferably the profile slotting is configured such that a constant bend radius is provided in any plane. It is also possible to envisage a sleeve which is conical with reducing wall thickness. The sleeve may be made of rigid or semi-rigid material for the purposes of constructing a bend limiter. Two units may be mounted back to back to form an attachment point at a mid-point along the length of a cable.

The component parts of the interlocking formations may comprise a first member having a neck portion leading axially to a circumferentially enlarged head portion, and a complimentary recess in which the first member is received. Several shapes for the interlocking formations are envisaged although a characteristic of all the formations is that there is axial interlocking by virtue of an undercut arrangement whereby there is an increase in the circumferential extent of a male formation from a root or neck portion in the axial direction. Most usually the shape of the first member will mirror the shape of the complimentary recess such that there are alternating first members and recesses. The formations may take the form of jigsaw-like formations, dovetail arrangements or more complex variations of same incorporating arcuate and/or straight line configurations.

Construction of the bend limiter has to ensure that there is no separation of the components in the limit condition and entails careful manipulation of wall thickness, clearances and shapes for the inter-engaging formations. We prefer to manufacture the limiter from a length of tube by forming in it the said profile slotting to produce the interlocked components. A jigsaw could be employed to cut the slot or a laser. It is also possible to envisage manufacturing the device as a moulding. It is also possible to envisage manufacturing the components as separate pieces and holding them together by appropriate collars but since this would add considerably to the complexities it is less preferred.

The invention will now be described further, by way of example only, with reference to the accompanying drawings; in which:-
Figure 1 is a plan view of a first embodiment of bend limiter according to the present invention,
Figure 2 is a plan view of a second embodiment of a limiter according to the present invention,
Figure 3 is a plan view of an alternative embodiment of bend limiter, and
Figures 4 and 5 show, in further detail, a preferred configuration of interlocking formations.

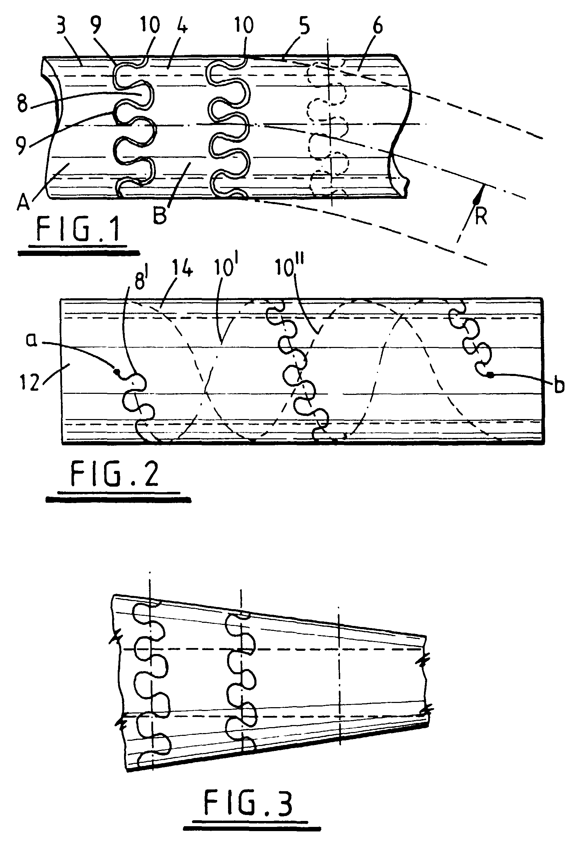

Referring firstly to Figure 1, a hollow tube is divided into a plurality of axially interconnected components 3, 4, 5 and 6 with the connection between the components being by way of interlocking formations. A line of profiled slotting 10 separates the interlocked components. The profiled slot forms a plurality of alternating projections 8 and recesses 9 with the projection of one component part being received within the recess of the other component. The finite width of the slot 10 provides a clearance between the respective projections and recesses which allows for limited movement between the components whereby the longitudinal axis of the sleeve can adopt a limited radius of curvature R. By providing a plurality of such components in axial connection with one another a limiter of desired minimum bend radius can be created.

Figure 2 refers to an alternative embodiment which comprises a tubular body 1, but in this embodiment the line of profile slotting 10' follows a helical path. In the illustrated embodiment the line of slotting commences intermediate the opposite ends of the tubular body at a and b respectively. The profile slot provides corresponding interlocked projections 8' and recesses 9' and the slot clearance allows relative movement so that the tubular member will adopt the prescribed minimum bend radius. Alternatively the line of profiling may extend along the entire length of the tubular body thereby dividing it into two interturned helical component parts. Multiple helical lines of profile slotting may be utilised, as denoted by dotted line 10''.

Figure 3 shows an alternative in which the wall thickness varies from one end to the other but otherwise follows the construction of Figure 1. Alternatively, a helical line of slotting may be used.

The reader will understand how a clearance between the projection and recess will allow for limited movement and in the limit condition engagement between the sides of the formations and recesses will give rise to a tensile stress to the outer radius whilst engagement between the head of the projection and the base of the recess on the inner side of the bend will give rise to compressive loading. The ultimate strength of the joint will be determined by the section of the root at x and the number of formations which take part in the load distribution at the limit condition.

According to the preferred method of manufacture, a sleeve has a clearance line cut through its wall in the shape of the desired formations be it on a circumferential path or a helical path according to the chosen embodiment thereby generating axially and circumferentially interlocked portions as described above which can move with respect to one another to a definite bend radius.

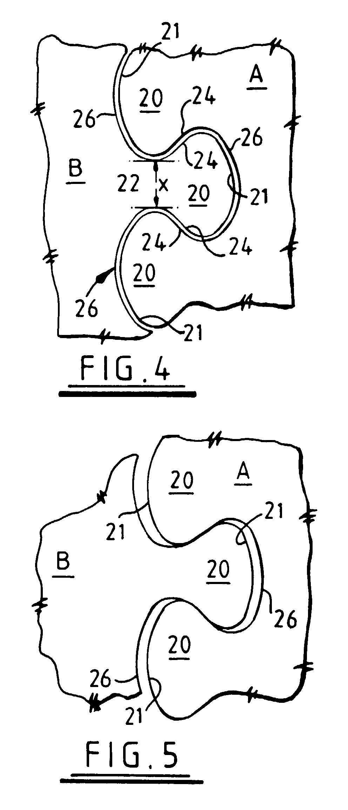

Reference is now made to Figure 4 which shows part of a preferred form of interlocking formation in further detail. The profiled slotting follows a curved path thereby defining, for each component part A, B, a series of curves defining a series of projections 20 having a circular head 21 and connected by an undercut arcuate recess 22 defining the neck width x and connected to the head by angular faces 24.

Figure 4 shows the formations in the as made condition with clearance between the adjacent faces. Figure 5 shows the same formation for the side of the coupling on the outside of the bend when faces 24 contact to take tensile forces. On the inside of the bend, contact will be made between faces 21, 26. The position of contact will depend on the plane of bending. We prefer to utilise a small number of relatively large protrusions. The broad neck and strong slope to faces 24 reduces the sensitivity of the design to the tolerances of the slot width.

## Claims

1. A device for placing about a cable, hose or other elongate flexible member to limit the bend radius as viewed along the longitudinal axis thereof, characterised in that the device comprises a tubular body having one or more lines of profiled slotting (10), each line defining a series of formations having component parts (8, 9) which are interlocked longitudinally and circumferentially and in which the slotting has a finite width which allows the component parts to move relative to each other within prescribed limits.

2. A device as claimed in claim 1 in which the line of slotting extends around the sleeve.

3. A device as claimed in claim 2 in which the line extends in a plane substantially perpendicular to the longitudinal axis.

4. A device as claimed in claim 2 or 3 in which there are several circumferentially extending lines axially spaced along the sleeve to divide the sleeve into a plurality of axial components (3, 4, 5, 6) connected by said interlocking formations.

5. A device as claimed in claim 1 in which the line of formations extend helically along the sleeve.

6. A device as claimed in claim 5 in which there are several helical lines of formations which divide the sleeve into a corresponding number of intertwined elements.

7. A device as claimed in claim 5 or 6 in which the or each helical line of formations extend the full length of the sleeve.

8. A device as claimed in claim 5 or 6 in which the or each helical line of formations start and/or finish intermediate the length of the sleeve.

9. A device as claimed in anyone of the preceding claims in which the profile of the slotting is configured to provide a constant bend radius in any plane.

10. A device as claimed in anyone of the preceding claims in which the sleeve is conical with reducing wall thickness.

11. A device as claimed in anyone of the preceding claims in which the sleeve is made of a rigid material.

12. A device as claimed in anyone of claims 1 to 4 in which the sleeve is made of a semi-rigid material.

13. A device as claimed in anyone of the preceding claims in which the component parts of the interlocking formations comprise a first member having a neck portion leading axially to an enlarged head portion, and a complimentary recess in which the first member is received.

14. A device as claimed in anyone of claims 1 to 12 in which there is axial interlocking between the formations by virtue of an undercut arrangement whereby there is an increase in the circumferential extent of a male formation from a root of neck portion in the axial direction.

15. A device as claimed in claim 13 or 14 in which the shape of the first member mirrors the shape of the complimentary recess such that there are alternating first members and recesses.

16. A device as claimed in anyone of the preceding claims in which a preformed length of tube has the or each line of profile slotting formed in it.

17. A device as claimed in claim 16 in which the slot is cut by a jigsaw or laser.

18. A device as claimed in anyone of claims 1 to 15 in which the tubular body is formed with the or each line of profiled slotting by moulding.
